# EUROPEAN PATENT APPLICATION

(11) **EP 2 709 332 A2**
(43) Date of publication of application: **19.03.2014**
(21) Application number: 11795146.7
(22) Date of filing: 03.06.2011
(51) Int. Cl.: H04L 29/02, H04L 29/12, H04L 12/56

(54) **METHOD, APPARATUS AND SYSTEM FOR ONLINE APPLICATION PROCESSING**

(71) Applicant: Huawei Technologies Co., Ltd., Shenzhen, Guangdong 518129 (CN)
(72) Inventor: ZHOU, Haojun, Guangdong 518129 (CN); PENG, Qiaoqiao, Guangdong 518129 (CN)
(74) Representative: Epping - Hermann - Fischer
(86) International application number: PCT/CN2011/075332
(87) International publication number: WO 2011/157180

(57) **Abstract**

A method for online application processing includes: receiving an online application execution request from a client (101); executing an online application (102); acquiring local resource data of the client from the client, and using the local resource data of the client as input data of the online application for processing (103); and transmitting online application execution information to the client in real time (104). In addition, the corresponding apparatus and system for online application processing are provided. The present invention enables a local resource application of a server to acquire local resource data of a user terminal.

## Description

### TECHNICAL FIELD

The present invention relates to the field of communications technologies, and in particular, to a method, an apparatus, and a system for online application processing.

### BACKGROUND

Various online application platforms have been launched to enable a user to enjoy more and better services on a user terminal. As an online application server (server), the online application platform can deploy various online applications developed by a third party. As a client (client), the user terminal can be remotely connected to the online application platform to experience the online applications.

In an online application scenario, the running and processing of all online applications occur on the server, and the client is only responsible for uploading inputs of user operations onto the server, and receiving and displaying image data locally. However, from the perspective of the user, the client handles the online application as if it is operating a local application. A typical process of interaction between the server and the client is as follows: The client uploads an input event generated by a user operation to the server; after receiving the input event, the server performs computing and processing and sends processed image data as response result to the client; and the client displays the received image data locally.

With the development of technologies, the user terminal can implement more and more functions, and many applications need to use local resources. For example, many user terminals already have sensors, where the sensors include a geographic location sensor, a temperature sensor, a humidity sensor, a noise sensor, an altitude sensor, an air pressure sensor, and so on. Various sensor applications that use the sensor data are developed. For example, some game applications need to perceive location information of a user environment in real time by using a geographic location sensor, and other applications need to provide information query according to conditions such as temperature and humidity of the user environment that are acquired by the sensor. However, in the existing process of interaction between the server and the client, the sensor application is unable to acquire the sensor data of the user environment, and the user is unable to experience the sensor application, or, even if the user can experience the sensor application, the sensor data does not belong to the user environment and the user still cannot experience the sensor application authentically, which deteriorates the user experience. For another example, many personal social networking applications need to use address book information of the terminal and use friend information in the address book to perform relevant operations, for example, to share news to a friend. However, in an online application scenario, all such applications run on the server side and are unable to acquire local resource data of the terminal, which deteriorates the user experience.

### SUMMARY

Embodiments of the present invention provide a method, an apparatus, and a system for online application processing so that a local resource application of a server can acquire local resource data of a user terminal.

In one aspect, the present invention provides a method for online application processing, including:
receiving an online application execution request from a client;
executing an online application, acquiring local resource data of the client from the client, and using the local resource data of the client as input data of the online application for processing; and
transmitting online application execution information to the client in real time.

In another aspect, the present invention provides an apparatus for online application processing, including:
a receiver, configured to receive an online application execution request from a client;
an executing unit, configured to execute an online application after the receiver receives the online application execution request;
an acquiring unit, configured to acquire local resource data of the client from the client after the executing unit executes the online application, where
the executing unit is further configured to use the local resource data of the client, which is acquired by the acquiring unit, as input data of the online application for processing; and
a transmitter, configured to transmit online application execution information of the executing unit to the client in real time.

In still another aspect, the present invention provides a system for online application processing, including the apparatus for online application processing according to the embodiments of the present invention, and a client, where
the client is configured to receive a local resource data acquisition message from the apparatus for online application processing and send acquired local resource data of the client to the apparatus for online application processing.

As seen from the foregoing technical solutions provided in the embodiments of the present invention, after executing the online application, the server in the embodiments of the present invention may acquire local resource data of the client from the client that requests an execution of the online application. In this way, the online application acquires the local resource data of the client, and the online application can use the local resource data of the client for processing to obtain a processing result; the obtained processing result can keep consistent with the local resource data of the client, which enables the user to experience the online application authentically and improves the user experience.

### BRIEF DESCRIPTION OF DRAWINGS

To illustrate the technical solutions in the embodiments of the present invention more clearly, the following briefly introduces the accompanying drawings required for describing the embodiments. Apparently, the accompanying drawings in the following descriptions show merely some embodiments of the present invention, and persons of ordinary skill in the art may still derive other drawings from these accompanying drawings without creative efforts.
FIG. 1 is a flowchart of a method for online application processing according to an embodiment of the present invention;
FIG. 2 is a signaling flowchart of a method for online application processing according to another embodiment of the present invention;
FIG. 3 is a signaling flowchart of a method for online application processing according to another embodiment of the present invention;
FIG. 4 is a structural diagram of an apparatus for online application processing according to an embodiment of the present invention;
FIG. 5 is a structural diagram of an apparatus for online application processing according to another embodiment of the present invention; and
FIG. 6 is a structural diagram of an apparatus for online application processing according to another embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

In the embodiments of the present invention, local resources are physical entities or logical entities on a client. A local resource application on an online application platform needs to use the physical entities or logical entities to implement functions of the local resource application. Local resource data used by the local resource application may include at least one of the following resource data: sensor data, address book data, calendar data, and camera data. The sensor data is acquired by a sensor device, the camera data is acquired by a camera, and the camcorder data is acquired by a camcorder. Specifically, the sensor device may include at least one of the following: a gravity sensor, a temperature sensor, a humidity sensor, a global positioning system (GPS: Global Positioning System) sensor, a noise sensor, an altitude sensor, an air pressure sensor, and an orientation sensor.

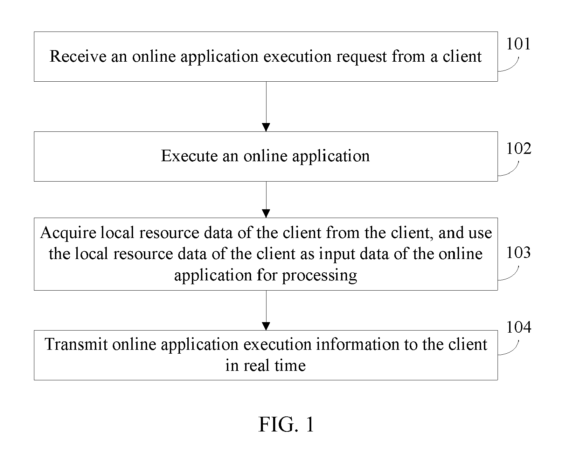

First, the following describes a method for online application processing according to an embodiment of the present invention. FIG. 1 illustrates a process of a method for online application processing according to an embodiment of the present invention. This embodiment deals with a processing procedure of an online application platform, that is, a server. This embodiment includes the following:

101. Receive an online application execution request from a client.

In one aspect, the online application execution request is sent after a user clicks a shortcut to an online application on the client. The online application execution request may include information about the online application to be executed as requested, for example, a name of the online application and an identifier of the online application. The online application execution request is sent over a transmission channel established between the client and the server, where the transmission channel may be a wired transmission channel or a wireless transmission channel and may be established before or after the user clicks the shortcut to the online application.

In another aspect, the user may click a link to the online application to send the online application execution request, where the online application execution request may include the information about the online application to be executed as requested, for example, a name of the online application, an identifier of the online application, and a uniform resource identifier (URI: Uniform Resource Identifier) of the online application.

In still another aspect, the user may log in to the online application platform by clicking a shortcut to the online application platform on the client, where the online application platform is a server that has an executing virtual machine. A desktop of an operating system run by the virtual machine displays icons of online applications available from the server. Meanwhile, a main program of the server may send image information of an execution picture of the virtual machine to the client in real time. Therefore, the client can display the picture consistent with the virtual machine execution status in the server in real time. In this case, the user can send an online application execution request by clicking the position of the icon of the corresponding online application by using the picture displayed on the client, where the online application execution request may include an operating system input control event. According to currently displayed online applications and the operating system input control event, the virtual machine may determine the online application to be executed as requested by the client. The operating system input control event may be a mouse input control event, a keyboard input control event, a remote control input control event, a touchscreen input control event, a joystick input control event, or the like. According to the operating system input control event, the server can determine coordinates of the position clicked by the user; according to the coordinates of the position, the server can further determine the online application clicked by the user.

The client may be any device capable of interacting with the online application platform, for example, a mobile phone, a personal computer (PC, Personal Computer), a personal digital assistant (PDA, Personal Digital Assistant), a television set, or a game player.

102. Execute an online application.

The server may use the virtual machine to execute the online application selected by the client for executing. Specifically, the applications executed in the virtual machine may include local resource applications and/or non-local resource applications. The local resource applications are online applications that need to use local resources of the client, and the non-local resource applications are online applications that do not need to use local resources of the client. The virtual machine may communicate with the client by using a main program. The main program is used to connect the virtual machine to the client, and communicate with the client in real time, and send the real-time execution information in the virtual machine to the client. Therefore, after the online application is executed in the virtual machine, the online application execution information may be sent to the client in real time. The server may start the main program when a transmission channel is established with the client; that is, the main program is in a one-to-one mapping relationship with the client. The server may also start the main program when receiving a local resource application execution request from the client; that is, the main program is in a one-to-one mapping relationship with the application. One client may correspond to multiple main programs, but one main program corresponds to only one client.

Multiple online applications may be executed in one virtual machine, and the multiple online applications may include local resource applications and non-local resource applications. The local resource data of the client does not need to be acquired from the client unless the active online application is a local resource application. Therefore, it is necessary to detect whether any local resource applications are active. Specifically, if a call performed by a local resource application for opening application programming interface (API, Application Programming Interface) of a local resource device is intercepted, it is determined that a local resource application is being executed. Certainly, if the corresponding process name at the time of executing the local resource application is predetermined, it is also appropriate to determine, according to the process of the local resource application, whether any local resource application is being executed.

This embodiment of the present invention describes a scenario where the online application is a local resource application.

103. Acquire local resource data of the client from the client, and use the local resource data of the client as input data of the online application for processing.

The acquiring local resource data of the client from the client may include: sending a local resource data acquisition message to the client when it is detected that the local resource data is required, and receiving the local resource data from the client, as detailed below:

In one aspect, after being executed, the local resource application calls a local resource data acquisition API by default to acquire the local resource data. However, the API is called to acquire only local resource data of the server by default. Therefore, the call performed by the local resource application for the local resource data acquisition API may be intercepted. When a call performed by the local resource application for the local resource data acquisition API is intercepted, a local resource data acquisition message may be sent to the main program. The main program forwards the local resource data acquisition message to the client, and therefore the client acquires and sends the local resource data of the client according to the message. In this way, the server, or more specifically, the main program, can receive the local resource data from the client. A hook program does not perform the interception until the online application calls the local resource data acquisition API. Because the hook program runs in the virtual machine, the hook program can intercept only the call performed by the online application in the virtual machine for the local resource data acquisition API. Correspondingly, the hook program does not intercept the call performed by non-online applications; that is, the applications that are not executed in the virtual machine, for the local resource data acquisition API. This ensures a correct execution of the non-online applications on the server.

In another aspect, some local resource data such as sensor data and camera data is not available unless the local resource devices are working, and the work of the local resource devices is driven by drivers. The default purpose of the API is to call local drivers. Therefore, the purpose of the API may be changed. For example, the purpose of the local resource data acquisition API may be changed to sending a local resource data acquisition message to the main program. In this way, when acquiring the local resource data acquisition message, the main program can determine that the local resource application needs to acquire the local resource data of the client, and send a local resource data acquisition message to the client so that the client acquires and sends the local resource data according to the message. This enables the server, or more specifically, the main program, to receive the local resource data from the client.

In another aspect, after the local resource application is executed, the local resource data needs to be acquired. Therefore, a local resource data acquisition message may be sent to the client directly after the local resource application is executed, and the client acquires and sends the local resource data according to the message. This enables the server, or more specifically, the main program, to receive the local resource data from the client.

In another aspect, after the local resource application is executed, a corresponding process emerges. Because the process name of the local resource application may be predetermined, the execution of the local resource application can be detected according to the process name. When the emergence of the process of the local resource application is detected according to the process name, a local resource data acquisition message may be sent to the client, so that the client acquires and sends the local resource data according to the message. This enables the server, or more specifically, the main program, to receive the local resource data from the client.

After receiving the local resource data from the client, the server, or more specifically, the main program, may forward the local resource data to the hook program or the API whose purpose is changed, and the hook program or the API whose purpose is changed forwards the local resource data to the local resource application, so that the local resource application uses the local resource data as input data for processing to obtain a processing result. Certainly, after receiving the local resource data from the client, the server may also store the local resource data into a buffer corresponding to the local resource application, and the hook program or the API whose purpose is changed may acquire the local resource data from the buffer and send it to the local resource application, where the buffer may be created when the local resource application is executed or when the virtual machine is started. The buffer may store only one piece of local resource data returned by the client, or may store multiple pieces of local resource data returned by the client. If more local resource data is received from the client when the buffer is full, the buffer may follow a first-in-first-out (FIFO, First In First Out) rule to substitute the latest local resource data of the client for the local resource data that is earliest received and already stored in the buffer. Because the storage space to be occupied by a piece of local resource data is predictable, the size of the storage space of the buffer can be determined according to the amount of local resource data that the buffer needs to store.

104. Transmit the online application execution information to the client in real time so as to display the online application execution information on the client, so that the user feels as if the online application is executed on the client directly.

The execution information may include audio data and/or image data generated in executing the online application, where the image data includes video data and/or plotting primitives.

Specifically, the main program may acquire the online application execution information in real time and send the acquired execution information to the client so that the execution information is displayed on the client. The main program may capture the execution picture in the operating system of the virtual machine in real time and send the captured picture data to the client. The picture data transmitted to the client may be data compressed in a certain manner or uncompressed original data. After receiving the picture data, the client displays the data after performing corresponding decompression or directly displays the data locally. Alternatively, the main program may capture the plotting primitives in the operating system of the virtual machine in real time and send the captured plotting primitive data to the client. The plotting primitive data transmitted to the client may be original or may be compressed in a certain manner. After receiving the plotting primitive data, the client displays the data locally in the form of an image directly or, after performing corresponding decompression, displays the data locally in the form of an image. The main program may keep capturing the plotting primitives in the operating system of the virtual machine to generate video data. The main program may record the sound in the operating system of the virtual machine to generate audio data. The plotting primitives is a combination of commands that are generated by processing and sorting the plotting commands in a plotting process and can redisplay image block logic information and geometric information.

As seen from the above description, after executing the online application, the server in the embodiment may acquire local resource data of the client from the client that requests an execution of the online application. In this way, the online application acquires the local resource data of the client, and the online application can use the local resource data of the client for processing to obtain a processing result; the obtained processing result can keep consistent with the local resource data of the client, which enables the user to experience the online application authentically and improves the user experience.

In the case that the local resource data needs to be acquired by using the local resource device, once some clients are started, the local resource device on the clients is opened. However, for saving energy, the local resource device on some clients is not opened until the device needs to be used. Therefore, before the local resource data is acquired from the local resource device of the client, the local resource device of the client needs to be opened. The local resource device needs to be opened so that the local resource data can be acquired. Therefore, the client may open the local resource device when receiving a local resource data acquisition message or may open the local resource device when receiving a local resource device opening message.

In one aspect, by default, after being executed, the local resource application calls a local resource device opening API to open the local resource device. Therefore, the call performed by the local resource application for the local resource device opening API may be intercepted. When a call performed by the local resource application for the local resource device opening API is intercepted, a local resource device opening message may be sent to the client so that the client opens the local resource device of the client according to the message. It can be understood that to acquire the local resource data, the local resource device needs to be opened. Therefore, when a call performed by the local resource application for the local resource device opening API is intercepted, a local resource data acquisition message may be sent to the client directly. After receiving the message, the client cannot acquire the local resource data unless the local resource device is opened, which reduces the number of messages sent by the server to the client and improves efficiency of interaction between the server and the client.

In another aspect, the work of some local resource devices is driven by drivers, and the default purpose of the API is to call local drivers. Therefore, the purpose of the local resource device opening API may be changed. For example, the purpose of the local resource device opening API may be changed to sending a local resource device opening message to the client. Specifically, a main program may send the local resource device opening message to the client. When acquiring the local resource device opening message, the main program can determine that the local resource application needs to open the local resource device, and therefore send a local resource device opening message to the client so that the client opens the local resource device according to the message. It can be understood that to acquire the local resource data, the local resource device needs to be opened. Therefore, when acquiring a local resource device opening message, the main program may send a local resource data acquisition message to the client directly. After receiving the message, the client cannot acquire the local resource data unless the local resource device is opened, which reduces the number of messages sent by the server to the client and improves efficiency of interaction between the server and the client.

After the use of some local resource devices stops, they are closed automatically. However, other local resource devices are not closed until a local resource device closing message is received. Therefore, the server needs to close the local resource device of the client after acquiring the local resource data from the client.

In one aspect, by default, after being executed, the local resource application calls a local resource device closing API to close the local resource device. Therefore, the call performed by the local resource application for the local resource device closing API may be intercepted. When a call performed by the local resource application for the local resource device closing API is intercepted, a local resource device closing message may be sent to the client so that the client closes the local resource device according to the message. In this way, the client can close the local resource device in time and reduce energy consumption of the client.

In another aspect, the work of some local resource devices is driven by drivers, and the default purpose of the API is to call local drivers. Therefore, to close the local resource device, the local resource application will necessarily call the drivers by using the API. Therefore, the purpose of the local resource device closing API may be changed. For example, the purpose of the local resource device closing API may be changed to sending a local resource device closing message to the client. Specifically, a main program may send the local resource device closing message to the client. When acquiring the local resource device closing message, the main program can determine that the local resource application needs to close the local resource device, and therefore can send a local resource device closing message to the client so that the client closes the local resource device according to the message. In this way, the client can close the local resource device in time and reduce energy consumption of the client.

In an embodiment of the present invention, a hook program is used to intercept the calls performed by the local resource application for the local resource data acquisition API, and/or the local resource device opening API, and/or the local resource device closing API. Specifically, when a call performed by the local resource application for the local resource data acquisition API is intercepted, the hook program may send a local resource data acquisition message to the main program. After receiving the local resource data acquisition message, the main program sends the local resource data acquisition message to the client, where the local resource data acquisition message may carry parameters used when the local resource application calls the local resource data acquisition API. Therefore, the client can acquire the local resource data directly according to the parameters used when the local resource application calls the local resource data acquisition API. It can be understood that because the client can acquire the local resource data according to the default parameters, the local resource data acquisition message does not necessarily carry the parameters used when the local resource application calls the local resource data acquisition API. With the local resource data acquisition message carrying no parameters used when the local resource application calls the local resource data acquisition API, the transmitted information is reduced, the occupied bandwidth is reduced, and the processing efficiency of the server and the client is improved.

Correspondingly, when a call performed by the local resource application for the local resource device opening API is intercepted, the hook program may send a local resource device opening message to the main program. After receiving the local resource device opening message, the main program sends the local resource device opening message to the client, where the local resource device opening message may carry parameters used when the local resource application calls the local resource device opening API so that the client can open the local resource device directly according to the parameters used when the local resource application calls the local resource device opening API. It can be understood that because the client can open the local resource device according to the default parameters, the local resource device opening message does not necessarily carry the parameters used when the local resource application calls the local resource device opening API.

Correspondingly, when a call performed by the local resource application for the local resource device closing API is intercepted, the hook program may send a local resource device closing message to the main program. After receiving the local resource device closing message, the main program sends the local resource device closing message to the client, where the local resource device closing message may carry parameters used when the local resource application calls the local resource device closing API. Therefore, the client can close the local resource device directly according to the parameters used when the local resource application calls the local resource device closing API. It can be understood that because the client can close the local resource device according to the default parameters, the local resource device closing message does not necessarily carry the parameters used when the local resource application calls the local resource device closing API.

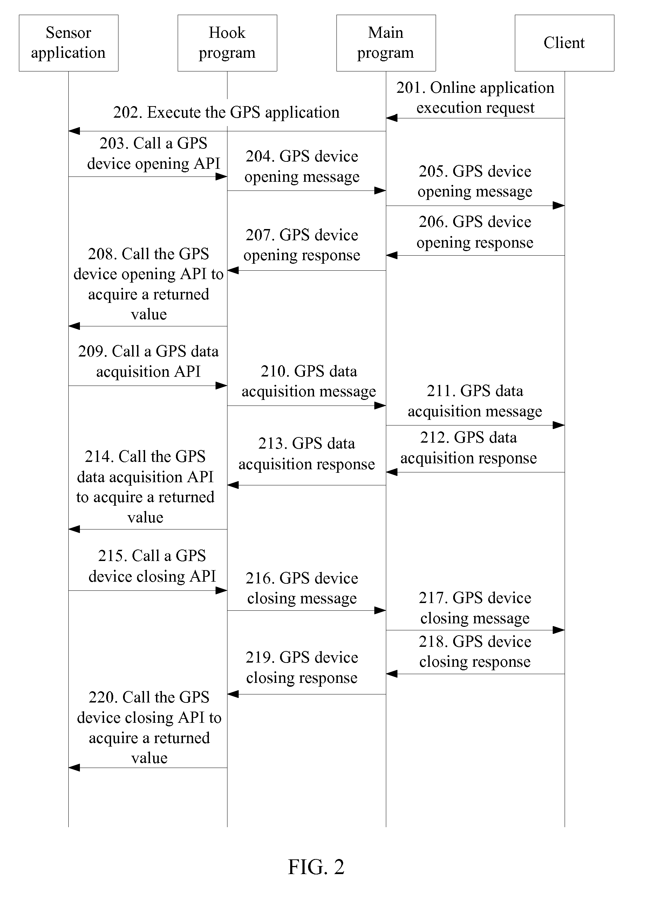

FIG. 2 illustrates a signaling interaction process between a server and a client according to another embodiment of the present invention. The online application in this embodiment is a local resource application, and the local resource application is specifically a GPS application, where the GPS application interacts with a main program by using a hook program. A system that runs on the server is Windows Mobile, the client is a mobile phone with an inherent GPS sensor, and a system that runs on the mobile phone is Windows Mobile. This embodiment includes the following:

201. The client sends an online application execution request to the server. In this embodiment, the online application requested by the online application execution request is a GPS application.

202. The server executes the GPS application.

If no virtual machine corresponding to the client is running, the virtual machine may run first, and then the GPS application is executed in the virtual machine. If the virtual machine corresponding to the client is already running, the GPS application may be executed in the virtual machine directly.

The main program may transmit the execution information of the virtual machine to the client in real time. Specifically, after the virtual machine executes the GPS application, the execution information of the virtual machine, that is, information about the execution of the GPS application, is transmitted to the client in real time.

203. The GPS application calls a GPS sensor opening API.

The GPS sensor opening API may be expressed as HANDLE GPSOpenDevice (HANDLE hNewLocationData, HANDLE hDeviceStateChange, const WCHAR *szDeviceName, DWORD dwFlags), and its function is to create a connection to a GPS sensor driver, where the parameter HANDLE hNewLocationData is a handle of an event (event) in the Windows Mobile system, the parameter HANDLE hDeviceStateChange is also a handle of an event in the Windows Mobile system, the parameter const WCHAR *szDeviceName is a reserved parameter and is NULL, and the parameter DWORD dwFlags is a reserved parameter and is 0.

204. After intercepting a call performed by the GPS application for the GPS sensor opening API, the hook program sends a GPS sensor opening message to the main program.

The GPS sensor opening message is predefined and may be expressed as HANDLE GPSOpenDeviceEx (). The message body may be the content of four input parameters of the HANDLE GPSOpenDevice (), that is, HANDLE hNewLocationData, HANDLE hDeviceStateChange, const WCHAR *szDeviceName, and DWORD dwFlags. Certainly, the message body may also be null. In this embodiment, the message body may be specifically expressed as HANDLE GPSOpenDeviceEx (HANDLE hNewLocationData, HANDLE hDeviceStateChange, const WCHAR *szDeviceName, DWORD dwFlags).

205. The main program sends the GPS sensor opening message to the client. Specifically, the message may be transmitted over a transmission channel between the main program and the client.

Specifically, in an embodiment of the present invention, the main program may forward the received GPS sensor opening message to the client directly.

Certainly, when the operating system that runs on the client is different from the operating system that runs on the server, the main program may also convert the received GPS sensor opening message according to the operating system that runs on the client and then send the message to the client.

206. When the client receives the GPS sensor opening message sent by the server, if the message body carries the content of the four input parameters of the HANDLE GPSOpenDevice (), that is, HANDLE hNewLocationData, HANDLE hDeviceStateChange, const WCHAR *szDeviceName, and DWORD dwFlags, the client may extract the content of the ANDLE hNewLocationData, the HANDLE hDeviceStateChange, the const WCHAR *szDeviceName, and the DWORD dwFlags from the message body and use the content as the four input parameters of the HANDLE GPSOpenDevice() function and call and execute the HANDLE GPSOpenDevice (HANDLE hNewLocationData, HANDLE hDeviceStateChange, const WCHAR *szDeviceName, DWORD dwFlags) locally to open the GPS sensor. If the message body of the GPS sensor opening message is null, default parameters are used to call and execute the HANDLE GPSOpenDevice (HANDLE hNewLocationData, HANDLE hDeviceStateChange, const WCHAR *szDeviceName, DWORD dwFlags) locally to open the GPS sensor. When the GPS sensor is opened successfully or the GPS sensor is opened unsuccessfully, a GPS sensor opening response is sent to the main program. If the GPS sensor is opened successfully, the handle of the driver of the GPS sensor is returned; or, if the GPS sensor is opened unsuccessfully, a null value is returned.

207. The main program forwards the received GPS sensor opening response to the hook program.

It can be understood that when the operating system that runs on the client is different from the operating system that runs on the server, the main program may also convert the received GPS sensor opening response according to the operating system that runs on the server and then send the message to the hook program.

208. After receiving the GPS sensor opening response, the hook program uses the content of the message body of the GPS sensor opening response as a value returned in response to the call performed by the GPS application for the GPS sensor opening API and sends the value to the GPS application, indicating that the GPS sensor is opened successfully or that the GPS sensor is opened unsuccessfully, whereupon the call performed by the GPS application for the GPS sensor opening API is terminated. If the GPS sensor is opened unsuccessfully, the GPS application may call the GPS sensor opening API again and perform the procedure from 204 to 208 again; or, the GPS application stops calling the GPS sensor opening API and stops performing step 209 and the steps following 209.

209. The GPS application calls a GPS data acquisition API.

The GPS data acquisition API may be expressed as DWORD GPSGetPosition(HANDLE hGPSDevice, GPS_POSITION *pGPSPosition, DWORD dwMaximumAge, DWORD dwFlags), and its function is to acquire position information from the GPS sensor, where the position information such as a longitude and a latitude is included in a structure body of a GPS_POSITION type, and the parameter HANDLE hGPSDevice is a handle returned at the time of calling the GPSOpenDevice or is NULL. If the parameter is NULL, the driver of the GPS sensor returns available position information that is buffered in the time limit dwMaximumAge; otherwise, the dwValidFields field in the pGPSPosition structure body is 0. The parameter GPS_POSITION *pGPSPosition is a pointer pointing to the GPS_POSITION structure body, the driver of the GPS sensor fills the structure body with the position information, and a dwValidFields component in the structure body indicates valid fields in the returned position information. The parameter DWORD dwMaximumAge is the maximum time limit of the position information and is measured in milliseconds, and the driver of the GPS sensor returns only the position information in the time limit specified by this parameter, without returning the position information earlier than the time limit. The parameter DWORD dwFlags is a reserved parameter and is 0.

210. After intercepting a call performed by the GPS application for the GPS data acquisition API, the hook program sends a GPS data acquisition message to the main program.

The GPS data acquisition message is predefined and may be expressed as DWORD GPSGetPositionEx (), where the message body may be the content of four input parameters of the DWORD GPSGetPosition (), that is, HANDLE hGPSDevice, GPS_POSITION *pGPSPosition, DWORD dwMaximumAge, and DWORD dwFlags. Certainly, the message body may also be null. In this embodiment, the message body may be specifically expressed as DWORD GPSGetPositionEx (HANDLE hGPSDevice, GPS_POSITION *pGPSPosition, DWORD dwMaximumAge, DWORD dwFlags).

211. The main program sends the GPS data acquisition message to the client. Specifically, the message may be transmitted over a transmission channel between the main program and the client.

Specifically, in an embodiment of the present invention, the main program may forward the received GPS data acquisition message to the client directly.

Certainly, when the operating system that runs on the client is different from the operating system that runs on the server, the main program may also convert the received GPS data acquisition message according to the operating system that runs on the client and then send the message to the client.

212. When the client receives the GPS data acquisition message sent by the server, if the message body carries the content of the four input parameters of the DWORD GPSGetPosition(), that is, HANDLE hGPSDevice, GPS_POSITION *pGPSPosition, DWORD dwMaximumAge, and DWORD dwFlags, the client may extract the content of the HANDLE hGPSDevice, the GPS_POSITION *pGPSPosition, the DWORD dwMaximumAge, and the DWORD dwFlags from the message body and use the content as the four input parameters of the DWORD GPSGetPosition() and call and execute the DWORD GPSGetPosition (HANDLE hGPSDevice, GPS_POSITION *pGPSPosition, DWORD dwMaximumAge, DWORD dwFlags) locally to acquire the GPS data. If the message body of the GPS data acquisition message is null, default parameters are used to call and execute the GPS_POSITION *pGPSPosition, the DWORD dwMaximumAge, and the DWORD dwFlags locally to acquire the GPS data. After the GPS sensor is opened, a GPS data acquisition response is sent to the main program, where the message body of the GPS data acquisition response carries the GPS data. Specifically, when the GPS data is acquired successfully, the message body of the GPS data acquisition response message carries the GPS data.

213. The main program forwards the received GPS data acquisition response to the hook program.

214. After receiving the GPS data acquisition response, the hook program uses the content of the message body of the GPS data acquisition response as a value returned in response to the call performed by the GPS application for the GPS data acquisition API and sends the value to the GPS application, whereupon the call performed by the GPS application for the GPS data acquisition API is terminated.

215. The sensor application calls a GPS sensor closing API.

The GPS sensor closing API may be expressed as DWORD GPSCloseDevice (HANDLE hGPSDevice), and its function is to close a connection to the driver of the GPS sensor, where the parameter HANDLE hGPSDevice is a handle returned at the time of calling the GPSOpenDevice.

216. After intercepting a call performed by the GPS application for the GPS sensor closing API, the hook program sends a GPS sensor closing message to the main program.

The GPS sensor closing message is predefined and may be expressed as DWORD GPSCloseDeviceEx (). The message body may be the content of the input parameter HANDLE hGPSDevice of the DWORD GPSCloseDevice(). Certainly, the message body may also be null. In this embodiment, the request may be specifically expressed as DWORD GPSCloseDeviceEx (HANDLE hGPSDevice).

217. The main program sends the GPS sensor closing message to the client. Specifically, the message may be transmitted over a transmission channel between the main program and the client.

Specifically, in an embodiment of the present invention, the main program may forward the received GPS sensor closing message to the client directly.

Certainly, when the operating system that runs on the client is different from the operating system that runs on the server, the main program may also convert the received GPS sensor closing message according to the operating system that runs on the client and then send the message to the client.

218. When the client receives the GPS sensor closing request sent by the server, if the message body carries the content of the input parameter HANDLE hGPSDevice of the DWORD GPSCloseDevice(), the client may extract the content of the HANDLE hGPSDevice from the message body and use the content as an input parameter of the DWORD GPSCloseDevice () function and call and execute the DWORD GPSCloseDevice (HANDLE hGPSDevice) locally to close the GPS sensor. If the message body of the GPS sensor closing message is null, the default parameter is used to call and execute the DWORD GPSCloseDevice (HANDLE hGPSDevice) locally to close the GPS sensor. When the GPS sensor is closed successfully or the GPS sensor is closed unsuccessfully, a GPS sensor closing response is sent to the main program.

219. The main program forwards the received GPS sensor closing response to the hook program.

220. After receiving the GPS sensor closing response, the hook program uses the content of the message body of the GPS sensor closing response as a value returned in response to the call performed by the GPS application for the GPS sensor closing API and sends the value to the GPS application, indicating that the GPS sensor is closed successfully or that the GPS sensor is closed unsuccessfully, whereupon the call performed by the GPS application for the GPS sensor closing API is terminated. If the GPS sensor is closed unsuccessfully, the GPS application may call the GPS sensor closing API again and perform the procedure from 215 to 220 again.

It can be understood that in this embodiment, 209 to 214 may be performed cyclically once, twice, or more times.

As seen from the above description, after executing the GPS application, the server in the embodiment may acquire local resource data of the client from the client that requests an execution of the GPS application. In this way, the GPS application acquires the local resource data of the client, and the GPS application can use the local resource data of the client for processing to obtain a processing result; the obtained processing result can keep consistent with the local resource data of the client, which enables the user to experience the online application authentically and improves the user experience.

The following describes a method for online application processing according to another embodiment of the present invention. For ease of description, it is assumed that: a system that runs on the server is Windows Mobile, the client is a mobile phone with an inherent GPS sensor, a system that runs on the mobile phone is Windows Mobile, and, in this embodiment, the online application is a local resource application, and the local resource application is specifically a GPS application.

In this embodiment, an API whose purpose is changed sends a local resource data acquisition message to a main program and sends the local resource data received from the main program to the GPS application; in this embodiment, the processing procedure of the GPS application is the same as the processing procedure of the GPS application in FIG. 2, the processing procedure of the main program is the same as the processing procedure of the main program in FIG. 2, and the processing procedure of the client is the same as the processing procedure of the client in FIG. 2, which are not repeated herein.

The changed API in this embodiment includes: a GPS sensor opening API, expressed as HANDLE GPSOpenDevice (HANDLE hNewLocationData, HANDLE hDeviceStateChange, const WCHAR *szDeviceName, DWORD dwFlags); a GPS data acquisition API, expressed as DWORD GPSGetPosition (HANDLE hGPSDevice, GPS_POSITION *pGPSPosition, DWORD dwMaximumAge, DWORD dwFlags); and a GPS sensor closing API, expressed as DWORD GPSCloseDevice (HANDLE hGPSDevice). In addition, three messages are defined: GPS sensor opening message, GPS data acquisition message, and GPS sensor closing message.

The GPS sensor opening message is sent by the GPS sensor opening API whose purpose is changed and is specifically sent when the GPS application calls the GPS sensor opening API whose purpose is changed, where the message body of the message may be the content of four input parameters of the HANDLE GPSOpenDevice(), that is, HANDLE hNewLocationData, HANDLE hDeviceStateChange, const WCHAR *szDeviceName, and DWORD dwFlags. After sending the GPS sensor opening message to the main program, the GPS sensor opening API whose purpose is changed waits for a GPS sensor opening response to be returned from the main program, uses the message body of the GPS sensor opening response as a value returned in response to the call for the GPS sensor opening API, and sends the value to the GPS application, whereupon the call performed by the GPS application for the GPS sensor opening API is terminated.

The GPS data acquisition message is sent by the GPS data acquisition API or GPS sensor opening API whose purpose is changed and is specifically sent when the GPS data acquisition API is called by the GPS application or when the GPS sensor opening API is called by the GPS application. When the GPS data acquisition message is sent when the GPS data acquisition API is called by the GPS application, the message body of the message is the content of three input parameters of the DWORD GPSGetPosition (), that is, HANDLE hGPSDevice, DWORD dwMaximumAge, and DWORD dwFlags. After sending the GPS data acquisition message to the main program, the GPS data acquisition API whose purpose is changed waits for a GPS data acquisition response to be returned by the main program, uses the message body of the GPS data acquisition response as a value returned in response to the call for the GPS data acquisition API, and sends the value to the GPS application, whereupon the call for the GPS data acquisition API is terminated.

The GPS sensor closing message is sent by the GPS sensor closing API whose purpose is changed and is specifically sent when the GPS application calls the GPS sensor closing API, where the message body of the message is the content of the parameter HANDLE hGPSDevice of the DWORD GPSCloseDevice(). After sending the GPS sensor closing message to the main program, the GPS sensor closing API whose purpose is changed waits for a GPS sensor closing response to be returned from the main program, uses the message body of the GPS sensor closing response as a value returned in response to the call for the GPS sensor closing API, and sends the value to the GPS application, whereupon the call for the GPS sensor closing API is terminated.

As seen from the above description, after executing the GPS application, the server in the embodiment may acquire local resource data of the client from the client that requests an execution of the GPS application. In this way, the GPS application acquires the local resource data of the client, and the GPS application can use the local resource data of the client for processing to obtain a processing result; the obtained processing result can keep consistent with the local resource data of the client, which enables the user to experience the online application authentically and improves the user experience.

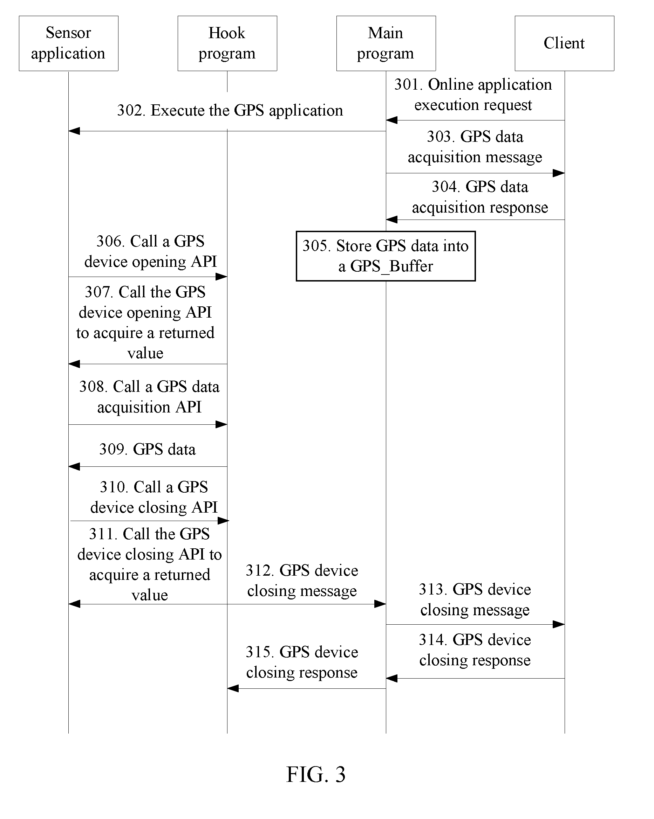

FIG. 3 illustrates a signaling interaction process between a server and a client according to another embodiment of the present invention. The online application in this embodiment is a local resource application, and the local resource application is specifically a GPS application, where the GPS application interacts with a main program by using a hook program. A system that runs on the server is Windows Mobile, the client is a mobile phone with an inherent GPS sensor, and a system that runs on the mobile phone is Windows Mobile. This embodiment includes the following:

301. The client sends an online application execution request to the server. In this embodiment, the online application requested by the online application execution request is a GPS application.

302. The server executes the GPS application, and creates a GPS_Buffer, where the storage space size of the GPS_Buffer is a positive integer multiple of sizeof(GPS_POSITION). Specifically, the storage space size of the GPS_Buffer may depend on the amount of the GPS data that the GPS_Buffer needs to store.

If no virtual machine corresponding to the client is running, the virtual machine needs to run first, and then the GPS application is executed in the virtual machine. If the virtual machine corresponding to the client is already running, the GPS application may be executed in the virtual machine directly.

The main program may transmit the execution information of the virtual machine to the client in real time. Specifically, after the virtual machine executes the GPS application, the execution information of the virtual machine, that is, information about the execution of the GPS application, is transmitted to the client in real time.

303. The server sends a GPS data acquisition message to the client.

The GPS data acquisition message may request the client to return GPS data once, may request the client to return the GPS data periodically, or may request the client to return the GPS data periodically in a period.

The message body of the GPS data acquisition message may be null or may carry default parameters that need to be used when the client calls a GPS data acquisition API.

304. After receiving the GPS data acquisition message, the client opens a GPS sensor to acquire GPS data and sends the acquired GPS data to the server by using a message body of a GPS data acquisition response.

Specifically, after receiving the GPS data acquisition message sent by the server, the client calls and executes the HANDLE GPSOpenDevice (HANDLE hNewLocationData, HANDLE hDeviceStateChange, const WCHAR *szDeviceName, DWORD dwFlags) locally to open the GPS sensor, calls the DWORD GPSGetPosition (HANDLE hGPSDevice, GPS_POSITION *pGPSPosition, DWORD dwMaximumAge, DWORD dwFlags) locally to acquire GPS data, and then sends the acquired GPS data to the server by using a GPS data acquisition response, where the message body of the GPS data acquisition response carries the GPS data, and the acquired GPS data may be specifically a data block to which the pGPSPosition is pointing and whose size is sizeof(GPS_POSITION). When the DWORD GPSGetPosition (HANDLE hGPSDevice, GPS_POSITION *pGPSPosition, DWORD dwMaximumAge, DWORD dwFlags) is called, if the message body of the GPS data acquisition message carries parameters, the parameters carried in the GPS data acquisition message are used directly; otherwise, default parameters are used.

The client may, as indicated by the GPS data acquisition message, call the DWORD GPSGetPosition (HANDLE hGPSDevice, GPS_POSITION *pGPSPosition, DWORD dwMaximumAge, DWORD dwFlags) locally once to acquire the GPS data, call the DWORD GPSGetPosition (HANDLE hGPSDevice, GPS_POSITION *pGPSPosition, DWORD dwMaximumAge, DWORD dwFlags) periodically to acquire the GPS data, or call the DWORD GPSGetPosition (HANDLE hGPSDevice, GPS_POSITION *pGPSPosition, DWORD dwMaximumAge, DWORD dwFlags) periodically in a period to acquire the GPS data.

305. After receiving a GPS data acquisition response, the main program stores the message body of the GPS data acquisition response, that is, the GPS data, into the GPS_Buffer.

306. The GPS application calls a GPS sensor opening API on the server.

The GPS sensor opening API may be expressed as HANDLE GPSOpenDevice (HANDLE hNewLocationData, HANDLE hDeviceStateChange, const WCHAR *szDeviceName, DWORD dwFlags), where the HANDLE hNewLocationData, the HANDLE hDeviceStateChange, the const WCHAR *szDeviceName, and the DWORD dwFlags are four input parameters of the HANDLE GPSOpenDevice.

It can be understood that 303 and 306 are not order-sensitive and may be performed concurrently.

307. After intercepting a call performed by the GPS application for the GPS sensor opening API, the hook program returns a non-null value to the GPS application, where the non-null value serves as a value returned in response to the call performed by the GPS application for the GPS sensor opening API, and the non-null value indicates success of opening the GPS sensor, whereupon the call performed by the GPS application for the GPS sensor opening API is terminated.

Alternatively, a GPS sensor opening function may be predefined and expressed as HANDLE GPSOpenDeviceEx (HANDLE hNewLocationData, HANDLE hDeviceStateChange, const WCHAR *szDeviceName, DWORD dwFlags), where the values of the four parameters of the HANDLE GPSOpenDeviceEx() may directly be the values of the four input parameters of the GPS sensor opening API. When a call performed by the GPS application for the GPS sensor opening API is intercepted, the GPS sensor opening function is executed to send a GPS sensor opening message to the main program. The main program may forward the GPS sensor opening message to the client or not. After receiving the GPS sensor opening message, the client may ignore the message directly if the client has opened the GPS sensor or may open the GPS sensor if the client has not opened the GPS sensor.

308. The GPS application calls a GPS data acquisition API.

The GPS data acquisition API may be expressed as DWORD GPSGetPosition (HANDLE hGPSDevice, GPS_POSITION *pGPSPosition, DWORD dwMaximumAge, DWORD dwFlags), where the HANDLE hGPSDevice, the GPS_POSITION *pGPSPosition, the DWORD dwMaximumAge, and the DWORD dwFlags are four input parameters of the DWORD GPSGetPosition.

309. After intercepting a call performed by the GPS application for the GPS data acquisition API, the hook program extracts GPS data from the GPS_Buffer and returns the data to the GPS application, and, specifically, may extract data whose size is sizeof(GPS_POSITION), where the GPS data is a value returned in response to the call performed by the GPS application for the GPS data acquisition API, whereupon the call performed for the GPS data acquisition API is terminated.

Specifically, a GPS data acquisition function may be predefined and expressed as DWORD GPSGetPositionEx (HANDLE hGPSDevice, GPS_POSITION *pGPSPosition, DWORD dwMaximumAge, DWORD dwFlags); when a call performed by the GPS application for the GPS data acquisition API is intercepted, the GPS data acquisition function is executed to acquire the GPS data.

310. The GPS application calls a GPS sensor closing API.

The GPS sensor closing API may be expressed as DWORD GPSCloseDevice (HANDLE hGPSDevice), where the HANDLE hGPSDevice is an input parameter of the DWORD GPSCloseDevice.

311. After intercepting a call performed by the GPS application for the GPS sensor closing API, the hook program returns a non-null value to the GPS application, where the non-null value serves as a value returned in response to the call performed by the GPS application for the GPS sensor closing API and indicates success of closing the GPS sensor, whereupon the call performed by the GPS application for the GPS sensor closing API is terminated.

Specifically, a GPS data closing function may be predefined and expressed as DWORD GPSCloseDeviceEx (HANDLE hGPSDevice). When a call performed by the GPS application for the GPS sensor closing API is intercepted, the GPS data closing function is called to implement the function of returning a non-null value to the GPS application as a value returned in response to the call for the GPS sensor closing API, and a GPS sensor closing message is sent to the main program. The message body of the GPS sensor closing message may be the content of the input parameter HANDLE hGPSDevice of the DWORD GPSCloseDevice(). Certainly, the message body may also be null.

312. Send a GPS sensor closing message to the main program.

It can be understood that 311 and 312 are not order-sensitive, and 311 may be performed before, after, or at the same time with 312.

313. The main program forwards the GPS sensor closing message to the client.

Specifically, in an embodiment of the present invention, the main program may forward the received GPS sensor closing message to the client directly.

Certainly, when the operating system that runs on the client is different from the operating system that runs on the server, the main program may also convert the received GPS sensor closing message according to the operating system that runs on the client and then send the message to the client.

314. When the client receives the GPS sensor closing request sent by the server, if the message body carries the content of the input parameter HANDLE hGPSDevice of the DWORD GPSCloseDevice(), the client may extract the content of the HANDLE hGPSDevice from the message body and use the content as an input parameter of the DWORD GPSCloseDevice () function and call and execute the DWORD GPSCloseDevice (HANDLE hGPSDevice) locally to close the GPS sensor. If the message body of the GPS sensor closing message is null, the default parameter is used to call and execute the DWORD GPSCloseDevice (HANDLE hGPSDevice) locally to close the GPS sensor. After the GPS sensor is closed, a GPS sensor closing response is sent to the main program.

315. The main program forwards the received GPS sensor closing response to the hook program. The hook program may ignore the received GPS sensor closing response directly.

As seen from the above description, after executing the GPS application, the server in the embodiment may acquire local resource data of the client from the client that requests an execution of the GPS application. In this way, the GPS application acquires the local resource data of the client, and the GPS application can use the local resource data of the client for processing to obtain a processing result; the obtained processing result can keep consistent with the local resource data of the client, which enables the user to experience the online application authentically and improves the user experience.

The following describes a method for online application processing according to another embodiment of the present invention. For ease of description, it is assumed that: a system that runs on the server is Windows Mobile, the client is a mobile phone with an inherent GPS sensor, a system that runs on the mobile phone is Windows Mobile, and, in this embodiment, the online application is a local resource application, and the local resource application is specifically a GPS application.

In this embodiment, an API whose purpose is changed sends a GPS data acquisition message to a main program, extracts the GPS data from a buffer, and sends the data to a sensor application; in this embodiment, the processing procedure of the GPS application is the same as the processing procedure of the GPS application in FIG. 3, the processing procedure of the main program is the same as the processing procedure of the main program in FIG. 3, and the processing procedure of the client is the same as the processing procedure of the client in FIG. 3, which are not repeated herein.

The API whose purpose is changed in this embodiment includes a GPS data acquisition API, expressed as DWORD GPSGetPosition (HANDLE hGPSDevice, GPS_POSITION *pGPSPosition, DWORD dwMaximumAge, DWORD dwFlags). The function of the GPS data acquisition API is to extract the GPS data from the GPS_Buffer and return the data to the GPS application and, specifically, to extract the data whose size is sizeof(GPS_POSITION).

Alternatively, this embodiment further provides two APIs: a GPS sensor opening API and a GPS sensor closing API. The GPS sensor opening API may be expressed as HANDLE GPSOpenDevice (HANDLE hNewLocationData, HANDLE hDeviceStateChange, const WCHAR *szDeviceName, DWORD dwFlags), and its function is to send a GPS sensor opening message to the main program and return a non-null value to the GPS application to indicate success of opening the GPS sensor. The GPS sensor closing API may be expressed as DWORD GPSCloseDevice (HANDLE hGPSDevice), and its function is to send a GPS sensor closing message to the main program and return a non-null value to the GPS application to indicate success of closing the GPS sensor.

As seen from the above description, after executing the GPS application, the server in the embodiment may acquire local resource data of the client from the client that requests an execution of the GPS application. In this way, the GPS application acquires the local resource data of the client, and the GPS application can use the local resource data of the client for processing to obtain a processing result; the obtained processing result can keep consistent with the local resource data of the client, which enables the user to experience the online application authentically and improves the user experience.

It should be noted that for ease of description in the above method embodiments, the steps are described as a combination of a series of actions. However, those skilled in the art should understand that the present invention is not limited to the order of the described actions because some steps may be performed in another order or simultaneously according to the present invention. In addition, those skilled in the art should also understand that the embodiments described herein are exemplary embodiments and that the involved actions and modules are not necessarily required in the present invention.

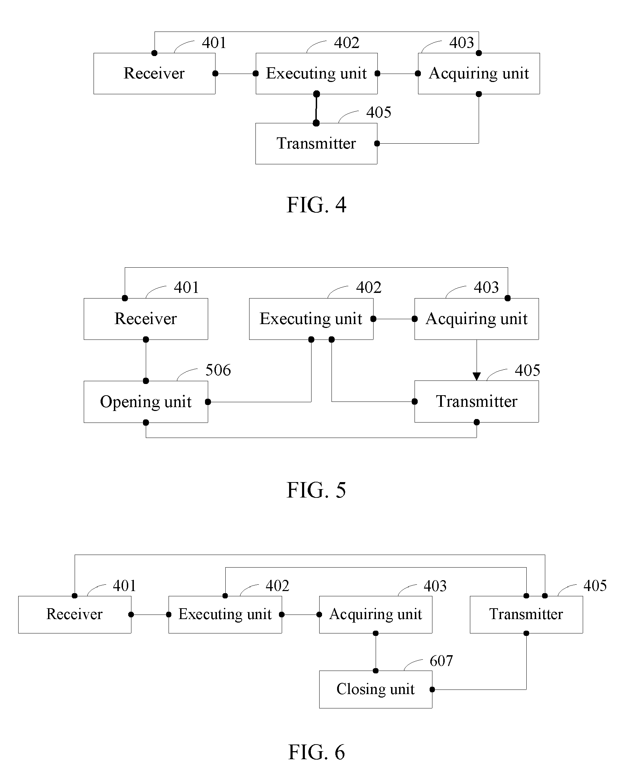

The following describes an apparatus for online application processing according to an embodiment of the present invention. FIG. 4 illustrates a structure of an apparatus for online application processing according to an embodiment of the present invention. The apparatus includes:
a receiver 401, configured to receive an online application execution request from a client;
an executing unit 402, configured to execute an online application after the receiver 401 receives the online application execution request;
an acquiring unit 403, configured to acquire local resource data of the client from the client after the executing unit 402 executes the online application; and
a transmitter 405, configured to transmit online application execution information of the executing unit 402 to the client in real time.

Specifically, the acquiring unit 403 acquires local resource data of the client from the client only if the online application executed by the executing unit 402 is a local resource application; and
the executing unit 402 is configured to use the local resource data of the client, which is acquired by the acquiring unit 403, as input data of the online application for processing.

As seen from the above description, after executing the online application, the server in the embodiment may acquire local resource data of the client from the client that requests an execution of the online application. In this way, the online application acquires the local resource data of the client, and the online application can use the local resource data of the client for processing to obtain a processing result; the obtained processing result can keep consistent with the local resource data of the client, which enables the user to experience the online application authentically and improves the user experience.

FIG. 5 illustrates a structure of an apparatus for online application processing according to another embodiment of the present invention. The apparatus includes:
a receiver 401, configured to receive an online application execution request from a client;
an executing unit 402, configured to execute an online application after the receiver 401 receives the online application execution request;
an opening unit 506, configured to open a local resource device of the client after the executing unit 402 executes the online application;
where, the opening unit 506 may specifically use a transmitter 405 to send a local resource device opening message to the client when intercepting a call performed by the online application for a local resource device opening API or when detecting emergence of a process of the online application; or when a purpose of a local resource device opening API called by the online application is changed to sending the local resource device opening message to the client, the online application executed by the executing unit 402 directly calls the local resource device opening API whose purpose is changed and sends the local resource device opening message to the client by using a transmitter 405;
an acquiring unit 403, configured to acquire local resource data of the client from the client after the opening unit 506 opens the local resource device of the client;
where, the executing unit 402 is configured to use the local resource data of the client, which is acquired by the acquiring unit 403, as input data of the online application for processing; and
the transmitter 405, configured to transmit online application execution information of the executing unit 402 to the client in real time.

As seen from the above description, after executing the online application, the server in the embodiment may acquire local resource data of the client from the client that requests an execution of the online application. In this way, the online application acquires the local resource data of the client, and the online application can use the local resource data of the client for processing to obtain a processing result; the obtained processing result can keep consistent with the local resource data of the client, which enables the user to experience the online application authentically and improves the user experience.

FIG. 6 illustrates a structure of an apparatus for online application processing according to another embodiment of the present invention. The apparatus includes:
a receiver 401, configured to receive an online application execution request from a client;
an executing unit 402, configured to execute an online application after the receiver 401 receives the online application execution request;
an acquiring unit 403, configured to acquire local resource data of the client from the client after the executing unit 402 executes the online application;
where, the executing unit 402 is configured to use the local resource data of the client, which is acquired by the acquiring unit 403, as input data of the online application for processing;
a transmitter 405, configured to transmit online application execution information of the executing unit 402 to the client in real time;
a closing unit 607, configured to close a local resource device of the client after the acquiring unit 403 acquires the local resource data from the client.

The closing unit 607 may be specifically configured to use the transmitter 405 to send a local resource device opening message to the client when intercepting a call performed by the online application for a local resource device closing API or when detecting disappearance of a process of the online application; or when a purpose of a local resource device closing API called by the online application is changed to sending the local resource device closing message to the client, the online application executed by the executing unit 402 directly calls the local resource device closing API whose purpose is changed and sends the local resource device closing message to the client by using the transmitter 405.

It can be understood that this embodiment may further include an opening unit 506 illustrated in FIG. 5.

As seen from the above description, after executing the online application, the server in the embodiment may acquire local resource data of the client from the client that requests an execution of the online application. In this way, the online application acquires the local resource data of the client, and the online application can use the local resource data of the client for processing to obtain a processing result; the obtained processing result can keep consistent with the local resource data of the client, which enables the user to experience the online application authentically and improves the user experience.

In an embodiment of the present invention, the acquiring unit 403 in the apparatus for online application processing may be specifically configured to: if detecting that the local resource data is required after the executing unit 402 executes the online application, send a local resource data acquisition message to the client by using the transmitter 405 and receive the local resource data from the client by using the receiver 401. Specifically, the acquiring unit may be specifically configured to: when intercepting a call performed by the online application for a local resource device opening API, when intercepting a call performed by the online application for a local resource data acquisition API, or when detecting emergence of a process of the online application, send a local resource data acquisition message to the client by using the transmitter 405 and receive local resource data from the client by using the receiver 401; or when a purpose of a local resource data acquisition API called by the online application is changed to sending the local resource data acquisition message to the client, the online application executed by the executing unit 402 directly calls the local resource data acquisition API whose purpose is changed and sends the local resource data acquisition message to the client by using the transmitter 405.

The apparatus for online application processing in the embodiment of the present invention may further include a memory, where the memory is configured to store the local resource data acquired by the acquiring unit 403 into a buffer. In this case, the executing unit 402 is specifically configured to use the local resource data in the memory as the input data of the online application for processing.

When the apparatus for online application processing in the embodiment of the present invention implements the method for online application processing in the embodiment of the present invention, the executing unit 402 may be used as a virtual machine, and the transmitter 405 may be used as a main program.

The apparatus for online application processing in the embodiment of the present invention may be used as a server, and specifically, an online application platform.

Another embodiment of the present invention further provides a system for online application processing. The system includes the apparatus for online application processing according to the embodiments of the present invention and a client. The client is configured to receive a local resource data acquisition message from the apparatus for online application processing and send acquired local resource data of the client to the apparatus for online application processing.

As seen from the above description, after executing the online application, the server in the embodiment may acquire local resource data of the client from the client that requests an execution of the online application. In this way, the online application acquires the local resource data of the client, and the online application can use the local resource data of the client for processing to obtain a processing result; the obtained processing result can keep consistent with the local resource data of the client, which enables the user to experience the online application authentically and improves the user experience.

Content such as information exchange between different modules in the apparatus and the system and the execution procedures are based on the same conception as the method embodiments of the present invention, and therefore are not repeated herein. For details, reference may be made to the description in the method embodiments of the present invention.

A person of ordinary skill in the art may understand that all or a part of the processes of the methods in the embodiments may be implemented by a computer program instructing relevant hardware. The program may be stored in a computer readable storage medium. When the program runs, the processes of the methods in the embodiments are performed. The storage medium may be a magnetic disk, an optical disk, a read-only memory (Read-Only Memory, ROM), or a random access memory (Random Access Memory, RAM).

The principle and implementation of the present invention are described with reference to specific embodiments. The above descriptions of the embodiments are merely provided for better understanding of the method and core idea of the present invention. Persons of ordinary skill in the art can make variations and modifications to the present invention in terms of specific implementation and applicability according to the idea of the present invention. Therefore, the specification shall not be construed as a limitation on the present invention.

## Claims

1. A method for online application processing, comprising:
receiving an online application execution request from a client;
executing an online application, acquiring local resource data of the client from the client, and using the local resource data of the client as input data of the online application for processing; and
transmitting online application execution information to the client in real time.

2. The method for online application processing according to claim 1, wherein the acquiring local resource data of the client from the client comprises: sending a local resource data acquisition message to the client when the local resource data is required and receiving the local resource data of the client.

3. The method for online application processing according to claim 2, wherein the sending a local resource data acquisition message to the client when the local resource data is required comprises:
sending the local resource data acquisition message to the client when intercepting a call performed by the online application for a local resource data acquisition Application Programming Interface (API) or when detecting emergence of a process of the online application; or
sending the local resource data acquisition message to the client by using a local resource data acquisition API called by the online application, wherein a purpose of the local resource data acquisition API called by the online application is changed to sending the local resource data acquisition message to the client.

4. The method for online application processing according to claim 3, wherein: if the local resource data acquisition message is sent when the call performed by the online application for the local resource data acquisition API is intercepted, the local resource data acquisition message comprises parameters of the local resource data acquisition API; and
if the local resource data acquisition message is sent to the client by using the local resource data acquisition API called by the online application, the local resource data acquisition message comprises parameters of the local resource data acquisition API called by the online application.

5. The method for online application processing according to any one of claims 1 to 4, after acquiring the local resource data of the client from the client, further comprising:
storing the local resource data into a buffer; and
the using the local resource data as input data of the online application for processing comprises:
reading the local resource data from the buffer, and using it as the input data of the online application for processing.

6. The method for online application processing according to any one of claims 1 to 4, wherein before acquiring the local resource data of the client from the client, the method further comprises:
opening a local resource device of the client.

7. The method for online application processing according to claim 6, wherein the opening a local resource device of the client comprises:
sending a local resource device opening message to the client when intercepting a call performed by the online application for a local resource device opening API or when detecting emergence of a process of the online application; or
sending a local resource device opening message to the client by using a local resource device opening API called by the online application, wherein a purpose of the local resource device opening API called by the online application is changed to sending the local resource device opening message to the client.

8. The method for online application processing according to claim 7, wherein: if the local resource device opening message is sent when the call performed by the online application for the local resource device opening API is intercepted, the local resource device opening message comprises parameters of the local resource device opening API; and
if the local resource device opening message is sent to the client by using the local resource device opening API called by the online application, the local resource device opening message comprises parameters of the local resource device opening API called by the online application.

9. The method for online application processing according to any one of claims 1 to 4, after acquiring the local resource data of the client from the client, further comprising:
closing a local resource device of the client.

10. The method for online application processing according to claim 9, wherein the closing a local resource device of the client comprises:
forwarding a local resource device closing message to the client when intercepting a call performed by the online application for a local resource device closing API or when detecting disappearance of a process of the online application; or
sending a local resource device closing message to the client by using a local resource device closing API called by the online application, wherein a purpose of the local resource device closing API called by the online application is changed to sending the local resource device closing message to the client.

11. The method for online application processing according to claim 10, wherein: if the local resource device closing message is sent when the call performed by the online application for the local resource device closing API is intercepted, the local resource device closing message comprises parameters of the local resource device closing API; and
if the local resource device closing message is sent to the client by using the local resource device closing API called by the online application, the local resource device closing message comprises parameters of the local resource device closing API called by the online application.

12. The method for online application processing according to any one of claims 1 to 4, wherein the online application execution information comprises:
audio data and/or image data generated in executing the online application, wherein the image data comprises video data and/or plotting primitives.

13. The method for online application processing according to any one of claims 1 to 4, wherein: the local resource data of the client comprises at least one of the following: sensor data, address book data, calendar data, camera data, and camcorder data; and
the sensor data is acquired by a sensor device, and the sensor device comprises at least one of the following:
a gravity sensor, a temperature sensor, a humidity sensor, a global positioning system sensor, a noise sensor, an altitude sensor, an air pressure sensor, and an orientation sensor.

14. An apparatus for online application processing, comprising:
a receiver, configured to receive an online application execution request from a client;
an executing unit, configured to execute an online application after the receiver receives the online application execution request;
an acquiring unit, configured to acquire local resource data of the client from the client after the executing unit executes the online application, wherein:
the executing unit is further configured to use the local resource data of the client, which is acquired by the acquiring unit, as input data of the online application for processing; and
a transmitter, configured to transmit online application execution information of the executing unit to the client in real time.

15. The apparatus for online application processing according to claim 14, wherein the acquiring unit is specifically configured to: if detecting that the local resource data is required after the executing unit executes the online application, send a local resource data acquisition message to the client by using the transmitter and receive the local resource data of the client by using the receiver.

16. The apparatus for online application processing according to claim 15, wherein: the acquiring unit is specifically configured to send the local resource data acquisition message to the client by using the transmitter when intercepting a call performed by the online application for a local resource data acquisition Application Programming Interface (API) or when detecting emergence of a process of the online application; or
when a purpose of a local resource data acquisition API called by the online application is changed to sending the local resource data acquisition message to the client, the online application executed by the executing unit directly calls the local resource data acquisition API whose purpose is changed and sends the local resource data acquisition message to the client by using the transmitter.

17. The apparatus for online application processing according to any one of claims 14 to 16, further comprising:
a memory, configured to store the local resource data acquired by the acquiring unit into a buffer, wherein:
the executing unit is specifically configured to use the local resource data in the memory as the input data of the online application for processing.

18. The apparatus for online application processing according to any one of claims 14 to 16, further comprising:
an opening unit, configured to open a local resource device of the client after the executing unit executes the online application, wherein:
the acquiring unit is specifically configured to acquire the local resource data of the client from the client after the opening unit opens the local resource device of the client.

19. The apparatus for online application processing according to claim 18, wherein: the opening unit is specifically configured to send a local resource device opening message to the client by using the transmitter when intercepting a call performed by the online application for a local resource device opening API or when detecting emergence of a process of the online application; or
when a purpose of a local resource device opening API called by the online application is changed to sending the local resource device opening message to the client, the online application executed by the executing unit directly calls the local resource device opening API whose purpose is changed and sends the local resource device opening message to the client by using the transmitter.

20. The apparatus for online application processing according to any one of claims 14 to 16, further comprising:
a closing unit, configured to close a local resource device of the client after the acquiring unit acquires the local resource data of the client from the client.

21. The apparatus for online application processing according to claim 20, wherein: the closing unit is specifically configured to send a local resource device closing message to the client by using the transmitter when intercepting a call performed by the online application for a local resource device closing API or when detecting disappearance of a process of the online application; or
when a purpose of a local resource device closing API called by the online application is changed to sending the local resource device closing message to the client, the online application executed by the executing unit directly calls the local resource device closing API whose purpose is changed, and sends the local resource device closing message to the client by using the transmitter.

22. A system for online application processing, comprising the apparatus for online application processing that is described in any one of claims 14 to 21 and a client, wherein:
the client is configured to receive a local resource data acquisition message from the apparatus for online application processing and send acquired local resource data of the client to the apparatus for online application processing.
